(19) Europäisches Patentamt
European Patent Office
Office européen des brevets

(11) **EP 3 350 561 B1**

(12) **EUROPÄISCHE PATENTSCHRIFT**

(45) Veröffentlichungstag und Bekanntmachung des Hinweises auf die Patenterteilung:
**29.04.2020  Patentblatt 2020/18**

(21) Anmeldenummer: **16763283.5**

(22) Anmeldetag: **12.09.2016**

(51) Int Cl.:
***G01M 3/32*** *(2006.01)*

(86) Internationale Anmeldenummer:
**PCT/EP2016/071416**

(87) Internationale Veröffentlichungsnummer:
**WO 2017/046027 (23.03.2017 Gazette 2017/12)**

(54) **LECKDETEKTION BEIM EVAKUIEREN EINER PRÜFKAMMER ODER EINES PRÜFLINGS**

LEAK DETECTION DURING EVACUATION OF A TEST CHAMBER OR OF A TEST ITEM

DÉTECTION DE FUITE LORS DE LA CRÉATION DU VIDE DANS UNE CHAMBRE DE TEST OU UNE PIÈCE D'ESSAI

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: **15.09.2015  DE 102015217598**

(43) Veröffentlichungstag der Anmeldung:
**25.07.2018  Patentblatt 2018/30**

(73) Patentinhaber: **Inficon GmbH**
**50968 Köln (DE)**

(72) Erfinder:
• **PUCHALLA-KÖNIG, Jochen**
**50129 Bergheim (DE)**
• **GERDAU, Ludolf**
**50189 Elsdorf (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 2 801 716          DE-A1-102011 086 486**
**US-A1- 2002 000 117**

• **Hein Hundal: "Polynomial Approximation of the Exponential Function", Wolfram Demonstrations Project , 7. März 2011 (2011-03-07), XP002763870, Gefunden im Internet: URL:http://demonstrations.wolfram.com/Poly nomialApproximationOfTheExponentialFunctio n/ [gefunden am 2016-11-07]**
• **K Zapfe: "Leak Detection", , 1 January 2007 (2007-01-01), XP055637696, Retrieved from the Internet: URL:https://cds.cern.ch/record/1047068/fil es/p227.pdf [retrieved on 2019-10-30]**

**Beschreibung**

Die Erfindung betrifft ein Verfahren zur Detektion eines Lecks in einem Prüfling.

Bei der Prüfung auf das Vorliegen von Lecks in Prüflingen, wie zum Beispiel Wärmetauschern, ist es bekannt, den Prüfling in eine zu evakuierende Prüfkammer einzubringen. Die Prüfkammer wird evakuiert, so dass in der Prüfkammer im Bereich außerhalb des Prüflings ein Vakuumdruck herrscht, während außerhalb der Prüfkammer und innerhalb des Prüflings etwa Atmosphärendruck vorliegt. Hierbei kann der Prüfling mit einem Testgas befüllt werden. Im Falle eines Lecks strömt das im Prüfling enthaltene Gas durch das Leck in das Vakuum der Prüfkammer und führt dort zu einer messbaren Erhöhung des Partialdruckes des Gases. Daher wird der Verlauf des Partialdruckes des Gases innerhalb der evakuierten Prüfkammer gemessen und daraus die Leckrate berechnet.

Bei einem alternativen Prüfverfahren wird der Prüfling evakuiert und einer ein Testgas aufweisenden umgebenden Atmosphäre ausgesetzt, so dass das Testgas durch ein mögliches Leck in den Prüfling eindringt. Zur Leckdetektion wird dann der Partialdruck des Testgases innerhalb des Prüflings gemessen.

Herkömmlicherweise muss mit der Leckagedetektion gewartet werden, bis das vom Lecksuchgerät gemessene Leckratensignal, das heißt der Partialdruck des Gases innerhalb der Prüfkammer oder im Prüfling, ausreichend gering und ausreichend stabil ist. Erst dann ist es möglich, durch Lecks in dem Prüfling auftretende geringfügige Erhöhungen des Partialdruckes des Gases in der evakuierten Prüfkammer oder im evakuierten Prüfling zu erfassen. Das gemessene Leckratensignal des Lecksuchgeräts setzt sich somit aus zwei Komponenten zusammen, zum einen aus den Gasanteilen, die aus einem möglichen Leck in die Prüfkammer oder den Prüfling gelangen, und zum anderen aus sämtlichen anderen in der Prüfkammer oder im Prüfling enthaltenen Gasen, zum Beispiel noch enthaltene Restluft oder aus den Kammerwänden beziehungsweise Prüflingswänden diffundierenden oder desorbierenden Gasanteilen. Der Anteil dieses Untergrundsignals im Messsignal muss also ausreichend gering und ausreichend stabil werden, um eine mögliche Leckage in dem Prüfling überhaupt detektieren zu können.

US 2002/0000117 A1 beschreibt ein Verfahren zur Leckdetektion an einem in einer Prüfkammer enthaltenen und flüssigkeitsgefüllten Prüfling.

DE 10 2011 086 486 A1 beschreibt eine Vorrichtung zur Lecksuche an einem in einer Folienkammer enthaltenen Prüfling.

Hein Hundal: "Polynomial Approximation of the Exponential Function", Wolfram Demonstrations Project, 7. März 2011, XP002763870 befasst sich mit approximierenden Fitfunktionen für Exponentialfunktionen.

EP 2 801 716 A1 beschreibt ein Leckdetektionsverfahren in einem Kraftstofftank.

K. Zapfe: "Leak detection", Mai 2006, DOI: 10.5170 CERN-2007-003.227, beschreibt Leckdetektionsverfahren.

Der Erfindung liegt die Aufgabe zugrunde, ein verbessertes und schnelleres Detektieren eines Lecks in einem Prüfling zu ermöglichen.

Das erfindungsgemäße Verfahren wird definiert durch die Merkmale der Ansprüche 1 oder 2.

Demnach wird, nachdem der Prüfling in der Prüfkammer positioniert ist, während des Evakuierens der Prüfkammer der Partialdruck des Gases innerhalb der Prüfkammer im Bereich außerhalb des Prüflings als Messsignal M gemessen. Aus dem Verlauf des Messsignals $M(t)$ über der Zeit t und einer Fitfunktion $F(t)$ wird die Differenz $D(t) = M(t) - F(t)$ gebildet. Die Fitfunktion $F(t)$ weist den Term $t^{-n}$ auf, wobei n eine positive rationale Zahl ist. Insbesondere ist n keine negative rationale Zahl und nicht 0. Das Beurteilen auf Vorliegen eines Lecks im Prüfling erfolgt dann anhand des Differenzsignals D, das heißt also unter Berücksichtigung der Fitfunktion F und insbesondere bereits während des Evakuierens der Prüfkammer.

In entsprechender Weise ist das erfindungsgemäße Verfahren auch bei der Evakuierung des Prüflings anwendbar, wobei als Messsignal M der Partialdruck des Gases innerhalb des Prüflings während dessen Evakuierung ist.

Mit Hilfe der Fitfunktion F wird derjenige Anteil des Messsignals geschätzt, der dem Untergrundsignal entspricht und somit nicht aus einem Leck im Prüfling resultiert. Die Fitfunktion repräsentiert Gasanteile in dem Messsignal, die durch Diffusion und/oder Desorption aus den Wänden der Prüfkammer oder des Prüflings resultieren. Diese Effekte treten üblicherweise bereits bei einem Druck von unter einem Millibar und insbesondere unter 0,1 Millibar auf. Mit dem erfindungsgemäßen Verfahren unter Verwendung der Fitfunktion kann eine aussagekräftige Beurteilung, ob ein Leck vorliegt, bereits während der Evakuierung der Prüfkammer bei Drücken von bis zu einem Millibar und bei stark fallendem Untergrundsignal erfolgen.

Vorzugsweise handelt es sich bei n um eine Zahl, die größer oder gleich 1 ist, wobei n bevorzugt eine positive ganze Zahl und insbesondere keine negative ganze Zahl oder 0 ist. Besonders bevorzugt ist der Fall n = 2, so dass die Fitfunktion $F(t)$ den Term $t^{-2} = \dfrac{1}{t^2}$

aufweist. Durch diesen Term der Fitfunktion werden aus den Wandmaterialien, insbesondere aus Kunststoffen (Dichtungen) der Prüfkammer desorbierende Gasanteile repräsentiert. Beim Evakuieren der Prüfkammer oder des Prüflings werden zunächst in der Prüfkammer oder im Prüfling ursprünglich enthaltene Gase, typischerweise Luft, abgepumpt. Bei Unterschreiten eines bestimmten Drucks beginnen Gasanteile aus den Oberflächen der Prüfkammerwände oder Prüflingswände zu diffundieren. Die Diffusion erfolgt typischerweise aus Metalloberflächen und nimmt mit 1/t, das heißt mit dem Kehrwert der Zeit t, ab. Die durch Desorption in die Prüfkammer oder den Prüfling gelangten Gasanteile nehmen circa mit $1/t^2$ über der Zeit t ab. Daher ist es gemäß einem Ausführungsbeispiel vorteilhaft, wenn die Fitfunktion den Term $1/t^2$ aufweist.

Die Fitfunktion F kann insbesondere lauten F(t) = 1 / (c + a·t)$^2$, wobei a und c jeweils konstante Zahlen sind.

Vorteilhafterweise wird die Fitfunktion F($t$) für einen vorgegebenen Zeitraum ermittelt. Dieser Zeitraum kann im Bereich zwischen etwa 1 und 5 Sekunden und vorzugsweise circa zwei Sekunden betragen. Vorteilhafterweise endet der Zeitraum mit dem Zeitpunkt der jeweils aktuellen Messung.

Es ist weiterhin von Vorteil, wenn die Fitfunktion so lange zu jedem jeweils neuen Messwert berechnet wird, wie das Differenzsignal D($t$) kleiner ist als beispielsweise ein Tausendstel des Messsignals M($t$).

Das Beurteilen auf Vorliegen eines Lecks im Prüfling anhand des Differenzsignals D kann erfolgen, sobald der Prüfkammerdruck oder der Prüflingsdruck ein Millibar und vorzugsweise etwa 0,1 Millibar unterschreitet.

Ein Leck kann als detektiert angesehen werden, wenn das Differenzsignal einen Schwellwert von einem Hundertstel des Messsignals M(t) überschreitet.

Im Folgenden wird anhand der Figuren ein Ausführungsbeispiel der Erfindung näher erläutert. Es zeigen:

Figur 1 die sich einstellenden Signalverläufe bei einem Edelstahlfass und

Figur 2 die sich einstellenden Signalverläufe bei einem Kunststofffass.

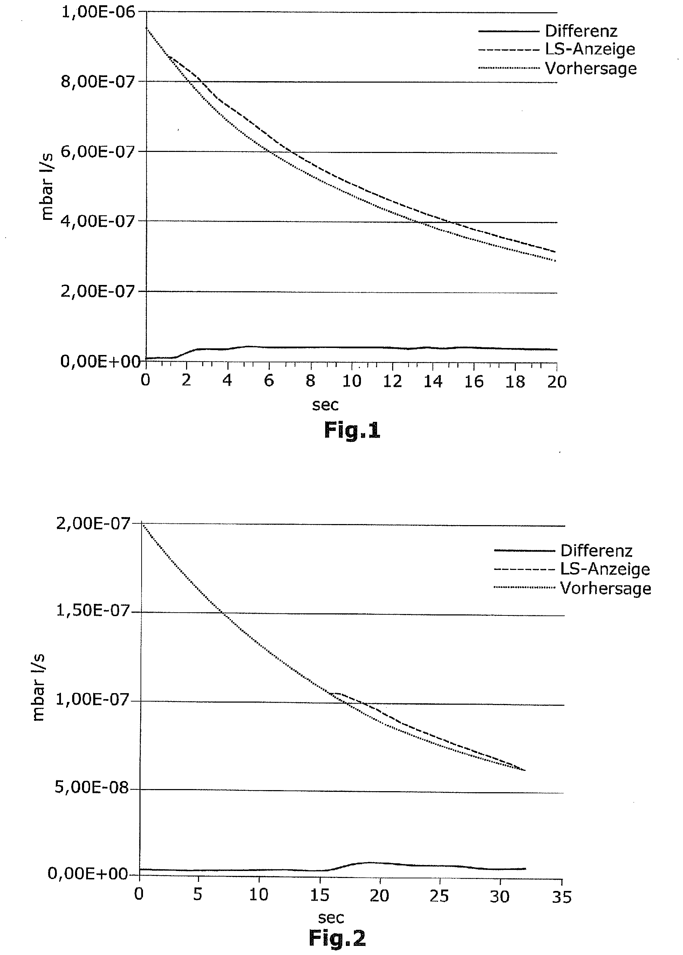

Figur 1 zeigt die sich einstellenden Signalverläufe bei der Evakuierung eines 10-Liter Fass als Prüfling. Gestrichelt wird das Messsignal M($t$) der gemessenen Leckrate in Millibar mal Liter pro Sekunde über der Zeit in Sekunden dargestellt. Gepunktet ist die Fitfunktion F($t$) dargestellt, die den Term $\dfrac{1}{t^2}$ enthält. Die Fitfunktion repräsentiert das während der Evakuierung mit $\dfrac{1}{t^2}$ abfallende Untergrundsignal. Als durchgezogene Linie ist das Differenzsignal D($t$) = M($t$) - F($t$) dargestellt. Das Differenzsignal entspricht dem tatsächlich durch ein Leck im Prüfling resultierenden Signal.

Ein Leck von etwa $3 \cdot 10^{-8} \dfrac{mbar \cdot l}{s}$ kann auf einem stark fallenden Untergrund bei etwa

$9 \cdot 10^{-7} \dfrac{mbar \cdot l}{s}$ gemessen werden. Dabei fällt das Signal pro Sekunde um etwa $7{,}5 \cdot 10^{-8}$ mbar l/s, also um mehr als das Doppelte des gemessenen Lecks.

Figur 2 zeigt den Fall einer Evakuierung eines Prüflings in Form eines 10-Liter Kunststofffasses. Ein Leck der Leckrate von circa $3 \cdot 10^{-9} \dfrac{mbar \cdot l}{s}$ kann auf einem stark fallenden Untergrundsignal (pro Sekun-de um etwa $5 \cdot 10^{-9}$ mbar l/s) bei etwa $1 \cdot 10^{-7} \dfrac{mbar \cdot l}{s}$ erkannt werden.

## Patentansprüche

1. Verfahren zur Detektion eines Lecks in einem in einer Prüfkammer enthaltenen Prüfling mit den Schritten:

   Positionieren des Prüflings in der Prüfkammer,
   Evakuieren der Prüfkammer,
   Messen des Partialdruckes eines Gases innerhalb der Prüfkammer während deren Evakuierung als Messsignal M,
   **dadurch gekennzeichnet, dass** das Verfahren zusätzlich folgende Schritte umfasst:
   Bilden der Differenz D aus dem Verlauf des Signals M($t$) über der Zeit t und einer Fitfunktion F($t$), die Gasanteile in dem Messsignal M repräsentiert, die durch Diffusion und/oder Desorption aus einer Wand der Prüfkammer oder des Prüflings resultieren und den Term t$^{-n}$ enthält, wobei n eine positive rationale Zahl ist, und Beurteilen auf Vorliegen eines Lecks im Prüfling anhand des Differenzsignals D.

2. Verfahren zur Detektion eines Lecks in einem Prüfling, mit den Schritten Evakuieren des Prüflings, Messen des Partialdrucks eines Gases innerhalb des Prüflings während dessen Evakuierung als Messsignal M, **dadurch gekennzeichnet, dass** das Verfahren zusätzlich folgende Schritte umfasst:

   Bilden der Differenz D aus dem Verlauf des Messsignals M($t$) über der Zeit und einer Fitfunktion F($t$), die Gasanteile in dem Messsignal M repräsentiert, die durch Diffusion und/oder Desorption aus einer Wand des Prüflings resultieren und den Term t$^{-n}$ aufweist, wobei n eine positive rationale Zahl ist, und Beurteilen auf Vorliegen eines Lecks im Prüfling anhand des Differenzsignals D.

**3.** Verfahren nach Anspruch 1, **dadurch gekennzeichnet, dass** n größer als oder gleich 1 ist und vorzugsweise eine ganze Zahl.

**4.** Verfahren nach Anspruch 3, **dadurch gekennzeichnet, dass** n=2 ist, so dass die Fitfunktion F($t$) den Term $1/t^2$ aufweist.

**5.** Verfahren nach einem der vorhergehenden Ansprüche, **dadurch gekennzeichnet, dass** die Fitfunktion

$$F(t) = \frac{1}{(c + a \cdot t)^2}$$ lautet, wobei a und c jeweils konstante Zahlen sind.

**6.** Verfahren nach einem der vorhergehenden Ansprüche, **dadurch gekennzeichnet, dass** die Fitfunktion F($t$) für einen vorgegebenen Zeitraum während der Messung berechnet wird.

**7.** Verfahren nach Anspruch 6, **dadurch gekennzeichnet, dass** der Zeitraum im Bereich von circa 1 bis 5 Sekunden liegt und vorzugsweise etwa 2 Sekunden beträgt.

**8.** Verfahren nach einem der vorhergehenden Ansprüche, **dadurch gekennzeichnet, dass** die Fitfunktion solange für einen neuen Messwert berechnet wird, wie D($t$) < M($t$)11000 ist.

**9.** Verfahren nach einem der vorhergehenden Ansprüche, **dadurch gekennzeichnet, dass** das Beurteilen auf Vorliegen eines Lecks im Prüfling anhand des Differenzsignals D erfolgt, wenn der Druck innerhalb der Prüfkammer kleiner ist als 1 mbar und vorzugsweise kleiner ist als 0,1 mbar.

**10.** Verfahren nach einem der vorhergehenden Ansprüche, **dadurch gekennzeichnet, dass** ein Leck im Prüfling als erkannt gilt, sobald die Differenz D größer ist als M($t$)/100.

**Claims**

**1.** A method for detecting a leak in a specimen contained in a test chamber, the method comprising the following steps:

positioning the specimen in the test chamber,
evacuating the test chamber,
measuring the partial pressure of a gas within the test chamber as a measuring signal M during the evacuation of the test chamber,
**characterized in that** the method further comprises the following steps:

forming a difference D from the progression of the signal M(t) over time t and a fitting function F(t), representing the gas proportions in the measuring signal M, which results from diffusion and/or desorption from a wall of the test chamber or the specimen and includes the term $t^{-n}$, where n is a positive rational number, and
judging the presence of a leak in the specimen based on the differential signal D.

**2.** Method for detecting a leak in a specimen, the method comprising the following steps:

evacuating the specimen,
measuring the partial pressure of a gas within the specimen as a measuring signal M during the evacuation of the specimen,
**characterized in that** the method further comprises the following steps:

forming the difference D from the progression of the signal M(t) over time and a fitting function F(t), representing the gas proportions in the measuring signal M, which results from diffusion and/or desorption from a wall of the specimen and includes the term $t^{-n}$, where n is a positive rational number, and
judging the presence of a leak in the specimen based on the differential signal D.

**3.** The method of claim 1, **characterized in that** n is greater than or equal to 1 and preferably is an integer.

**4.** The method of claim 3, **characterized in that** n=2, so that the fitting function F(t) includes the term $1/t^2$.

**5.** The method of one of the preceding claims, **characterized in that** the fitting function is

$$F(t) = \frac{1}{(c + a \cdot t)^2},$$ wherein both a and c are constant numbers.

**6.** The method of one of the preceding claims, **characterized in that** the fitting function F(t) is calculated for a predetermined period during the measurement.

**7.** The method of claim 6, **characterized in that** the period is in the range from about 1 to 5 seconds and preferably is about 2 seconds.

**8.** The method of one of the preceding claims, **characterized in that** the fitting function is calculated for a new measuring value as long as D(t) < M(t)/1000.

9. The method of one of the preceding claims, **characterized in that** judging on the presence of a leak in the specimen is made based on the differential signal D, if the pressure within the test chamber is less than 1 mbar and preferably less than 0.1 mbar.

10. The method of one of the preceding claims, **characterized in that** a leak in the specimen is considered as being detected as soon as the difference D is greater than M(t)/100.

**Revendications**

1. Procédé de détection d'une fuite dans un objet de test contenu dans une chambre de test, le procédé comprenant les étapes suivantes :

positionner l'objet de test dans la chambre de test,
mettre la chambre de test sous vide,
mesurer la pression partielle d'un gaz à l'intérieur de la chambre de test lors de sa mise sous vide en tant que signal de mesure M,
**caractérisé en ce que** le procédé comprend en outre les étapes suivantes :

former la différence D à partir de la variation du signal M(t) dans le temps t et d'une fonction d'ajustement f(t) qui représente des fractions de gaz dans le signal de mesure M, qui résultent de la diffusion et/ou de la désorption d'une paroi de la chambre de test ou de l'objet de test, et qui comporte le terme $t^{-n}$, n étant un nombre rationnel positif, et
évaluer la présence d'une fuite dans l'objet de test sur la base du signal différentiel D.

2. Procédé de détection d'une fuite dans un objet de test, le procédé comprenant les étapes suivantes
mettre sous vide l'objet de test,
mesurer la pression partielle d'un gaz à l'intérieur de l'objet de test lors de la mise sous vide de celui-ci en tant que signal de mesure M,
**caractérisé en ce que** le procédé comprend en outre les étapes suivantes :

former la différence D à partir de la variation du signal de mesure M(t) dans le temps et d'une fonction d'ajustement F(t) qui représente les fractions de gaz dans le signal de mesure M, qui résultent de la diffusion et/ou de la désorption d'une paroi de l'objet de test, et qui comporte le terme $t^{-n}$, n étant un nombre rationnel positif, et
évaluer la présence d'une fuite dans l'objet de test à l'aide du signal de différence D.

3. Procédé selon la revendication 1, **caractérisé en ce que** n est supérieur ou égal à 1 et est de préférence un entier.

4. Procédé selon la revendication 3, **caractérisé en ce que** n = 2 de sorte que la fonction d'ajustement f(t) comporte le terme $1/t^2$.

5. Procédé selon l'une des revendications précédentes, **caractérisé en ce que** la fonction d'ajustement est $F(t) = \dfrac{1}{(c+a \cdot t)^2}$, a et c étant des nombres constants.

6. Procédé selon l'une des revendications précédentes, **caractérisé en ce que** la fonction d'ajustement F(t) est calculée pour une durée prédéterminée lors de la mesure.

7. Procédé selon la revendication 6, **caractérisé en ce que** la période est de l'ordre de 1 à 5 secondes environ et est de préférence de 2 secondes environ.

8. Procédé selon l'une des revendications précédentes, **caractérisé en ce que** la fonction d'ajustement est calculée pour une nouvelle valeur de mesure tant que D(t) < M(t)/1000.

9. Procédé selon l'une des revendications précédentes, **caractérisé en ce que** l'évaluation de la présence d'une fuite dans l'objet de test est effectuée sur la base du signal de différence D si la pression à l'intérieur de la chambre de test est inférieure à 1 mbar et de préférence inférieure à 0,1 mbar.

10. Procédé selon l'une des revendications précédentes, **caractérisé en ce qu'**une fuite dans l'objet de test est considérée comme détectée dès que la différence D est supérieure à M(t)/100.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020000117 A1
- DE 102011086486 A1

- EP 2801716 A1

**In der Beschreibung aufgeführte Nicht-Patentliteratur**

- **HEIN HUNDAL.** Polynomial Approximation of the Exponential Function. *Wolfram Demonstrations Project,* 07. Marz 2011

- **K. ZAPFE.** *Leak detection,* Mai 2006